# EUROPEAN PATENT APPLICATION

(11) **EP 1 107 175 A2**
(43) Date of publication of application: **13.06.2001**
(21) Application number: 00403455.9
(22) Date of filing: 08.12.2000
(51) Int. Cl.: G06K 19/077

(54) **Embossed IC card and information reading system therefor**

(30) Priority: 10.12.1999 JP 35209299
(71) Applicant: SONY CORPORATION, Tokyo (JP)
(72) Inventor: Shigeru, Arisawa, Shinagawa-ku, Tokyo (JP)
(74) Representative: Thévenet, Jean-Bruno

(57) **Abstract**

An embossable card (100) includes card members (7, 8) having an embossable area at a position specified in advance, an IC chip (4) sandwiched by the card members, and a loop antenna body (12) disposed around the IC chip (4) and connected to the IC chip (4). The width of a thick antenna pattern (12B) disposed along the embossable area, which constitutes the loop antenna body (12), is wider than the longitudinal length of the largest embossed letter or symbol formed by embossing.

## Description

### BACKGROUND OF THE INVENTION

### 1. Field of the Invention

The present invention relates to a non-contact-type IC cards used as bank cards, cash cards, or credit cards on which letters can be embossed; embossable IC cards suited to IC-card operation systems; manufacturing methods thereof; and information reading and confirming systems therefor.

### 2. Description of the Related Art

Embossed cards (cards which do not include electronic components) on which letters are embossed have been conventionally used as various bank cards, cash cards, and credit cards.

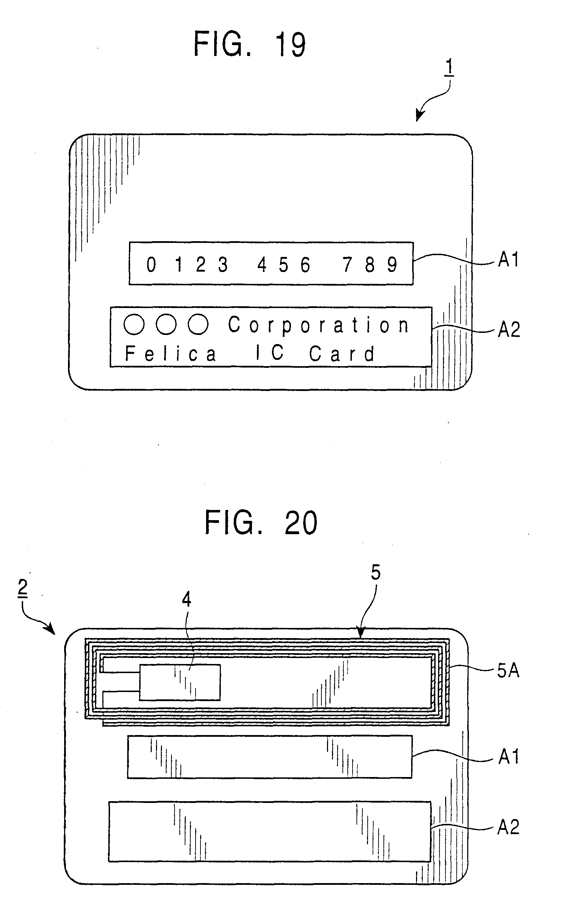

Fig. 19 is a plan showing an example structure of an embossed card 1 according to a conventional method. The embossed card shown in Fig. 19 has embossable areas A1 and A2 assigned at locations on a card member which are specified in advance by a JIS standard. In the embossable area Al, embossed symbols such as "0123 456 789" are formed as the membership number and the expiration date of the card owner. Below this area, in the embossable area A2, embossed letters indicating the party who issues the card, such as "ABC Corporation IC Card," and the name of the card owner are formed.

The letter and symbol information of the card owner formed in the embossable areas A1 and A2 is read by an information transfer means for use solely with an embossment information and the membership number and the expiration date of the card owner are transferred to a predetermined sheet in a so-called card payment systems. With these operations, a proof of the transaction remains, and the transaction amount is charged directly to the account of the card owner later. These systems are currently used in various banks, golf courses, credit card companies, and others.

In recent years, information reading and confirming systems using a card reader and writer for a non-contact data communication and IC cards having a built-in electronic component have been introduced for trial in the fields of ticket checking machines, security systems, and electronic money systems. This is because IC cards are provided with a non-volatile memory devices and have the advantage of being able to record more information related to the card owner than ID cards such as embossed cards having no electronic component in them.

Since such an IC card is of a non-contact type electrically, information is read from or written into the card by a special card reader and writer. To this end, the card has an antenna body and an IC chip in it. The card reader and writer supplies electrical power to the card in the form of electromagnetic energy and a DC voltage is generated within the card when information is read from or written into the card because, if the card is provided with a power supply, the maintenance thereof is troublesome and increases cost, and the power supply is an obstacle to making the card thinner.

In such a card reading system, electromagnetic waves in the short-wave frequency band (13.56 MHz) are used. Because the card size is much smaller than the wavelength of the electromagnetic waves, it is very inefficient and difficult to receive electric-field energy in the IC card having a dipole antenna in it. Therefore, the IC card is provided with a loop antenna to receive electromagnetic energy by electromagnetic coupling. In this case, a card loop-antenna body having a good receiving efficiency is required.

In the transition period from the use of embossed cards 1 to that of electronic cards in the bank and credit industries, embossable IC cards are demanded from which letter and symbol information of the card owner is read by both existing information transfer apparatuses for use solely with embossment information and card readers and writers for new systems.

If an IC card satisfying the demand is carelessly embossed with embossment information without any precautions, a loop antenna mounted within the IC card may be broken. A method is considered for providing a loop antenna body 5 formed by arranging a thin antenna pattern 5A in a loop manner so as to avoid the embossable areas A1 and A2 disposed at the locations specified by the JIS standard in an embossed card 2 having an electronic component in it, as shown in Fig. 20. However, since the area where the loop antenna body 5 is coupled with an electromagnetic field is considerably smaller than the card size, the receiving efficiency decreases.

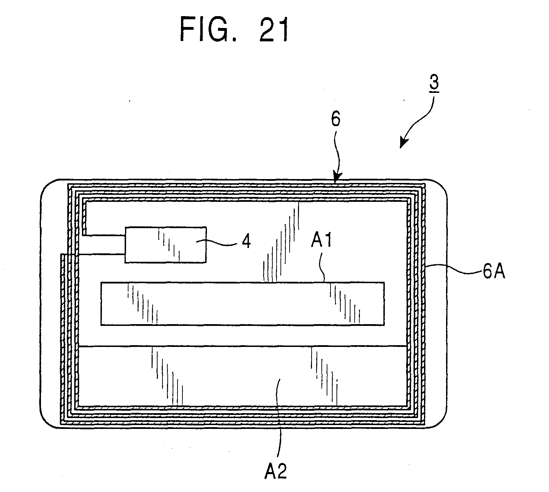

To solve this problem, a method is considered for extending a loop antenna body 6 so as to have almost the same size as the card in an embossed card 3 having an electronic component in it, as shown in Fig. 21. This method extends the coupling area with an electromagnetic field, but a thin antenna pattern 6A may be broken if a letter or a symbol is embossed at a portion outside the embossable area A2 since the thin antenna pattern 6A is disposed close to the embossable area A2. In this case, the function of the loop antenna body 6 is impaired and the reliability of the embossable IC card 3 is impaired.

### SUMMARY OF THE INVENTION

The present invention has been made in consideration of the above conditions. Accordingly, it is an object of the present invention to provide an embossable IC card in which an antenna pattern is prevented from being broken even if a letter or a symbol is formed at the antenna pattern outside an embossable area on the card member, and which allows a system which uses the card to operate smoothly; a manufacturing method of the card; and an information reading and confirming system for the card.

The foregoing object is achieved in one aspect of the present invention through the provision of an embossable IC card including a first card member having an embossable area where embossing is to be performed; a second card member disposed opposite the first card member; an IC chip sandwiched by the first and second card members; and an antenna pattern disposed around the IC chip and connected to the IC chip, wherein the width of the antenna pattern is wider than the longitudinal length of the largest letter or symbol to be embossed in the embossable area.

According to an embossable IC card of the present invention, since the width of the antenna pattern is made wider than the longitudinal length of the largest embossed letter or symbol formed in the embossable area by embossing, even if a letter or a symbol is formed at the antenna pattern outside the embossable area, a part of the antenna pattern is always left. Therefore, even if a letter or a symbol is formed outside the embossable area, the antenna pattern is prevented from being broken.

In addition, at a site where an information reading apparatus for IC cards is installed, a transaction amount is automatically charged at the site according to the letter and symbol information of the card owner read from the IC chip of the IC card. Even at a site where an information reading apparatus is not installed, letter and symbol information (hereinafter called embossment information) printed in a stand-out manner on the card is transferred to a slip by using an information transfer apparatus for use solely with embossment information, and the slip is left as proof of the transaction. Therefore, the transaction amount is automatically charged to the bank account of the customer later.

The foregoing object is achieved in another aspect of the present invention through the provision of an IC card including a first card member having an embossed area where embossing has been performed; a second card member disposed opposite the first card member; an IC chip sandwiched by the first and second card members; and an antenna pattern disposed around the IC chip and connected to the IC chip, wherein the width of the antenna pattern is wider than the longitudinal length of the largest embossed letter or symbol formed in the embossed area.

The foregoing object is achieved in still another aspect of the present invention through the provision of a transaction confirming method by using an IC card, the IC card including a first card member having embossed data formed in an embossed area; a second card member disposed opposite the first card member; an IC chip sandwiched by the first and second card members; and an antenna pattern disposed around the IC chip and connected to the IC chip, wherein the width of the antenna pattern is wider than the longitudinal length of the largest embossed letter or symbol formed in the embossed area, and the transaction confirming method including the steps of: reading the embossed data formed in the IC card; and reading information recorded in the IC chip from the IC card and performing transaction processing.

The present invention has been made in consideration of a condition in which, when usual embossed cards are exchanged for electronic cards, it is thought that information transfer means for use solely with embossment information being simultaneously changed to data processing means for IC cards during the transition will be very rare, but, rather, the transition to new systems will happen gradually.

According to a transaction confirming method by using an IC card, of the present invention, at a site where data processing means dedicated to IC cards is installed, the letter and symbol information of the card owner, read from the IC chip is read, and transactional processing is achieved. At a site where the data processing means is not installed, the letter and symbol information of the card owner printed in a stand-out manner in an embossable area is transferred to a slip by using information transfer means dedicated to embossment information, and the slip is left as the proof of the transaction. Therefore, the transactional bill is automatically charged to the bank account of the customer later.

As described above, in an embossed IC card according to the present invention, the width of a portion of an antenna pattern, which is disposed along an embossable area is made wider than the longitudinal length of the largest letter formed by embossing.

With this structure, even if a letter or a symbol is embossed at the antenna pattern outside the embossable area, a part of the antenna pattern always remains and the antenna pattern is prevented from being broken.

A transaction confirming method by using an IC card according to the present invention is provided with information transfer means for use solely with embossment information, for transferring the information related to the card owner formed in an embossable area to a sheet, or data processing means for IC cards for reading the information related to the card owner recorded in an IC chip and for achieving predetermined transaction processing.

With this structure, at a site where data processing means for the IC cards is installed, the information related to the card owner read from the IC chip is read and transaction processing is achieved, and at a site where the data processing means is not installed, the information related to the card owner printed in a stand-out manner in an embossable area is transferred to a slip by the information transfer means and the slip is left as proof of the transaction.

The present invention is suited to a non-contact-type IC cards used as bank cards, cash cards, and credit cards on which letters can be embossed, and operation systems for the IC cards.

### BRIEF DESCRIPTION OF THE DRAWINGS

Fig. 1 is a perspective view showing an example structure of an embossable IC card 100 according to an embodiment of the present invention.

Fig. 2 is a mounting image view showing an example structure of an embossable card 101 having a built-in electronic component according to a first embodiment.

Fig. 3 is a plan showing an example structure of an electronic component 11.

Fig. 4 is a view showing possible relationships between thick antenna patterns 12B and letter and symbol dimensions.

Fig. 5 is a view showing an example of formed letter and symbol information.

Fig. 6 is an outlined view showing an example structure of an embossable card 102 having a built-in electronic component according to a second embodiment.

Fig. 7 is a plan showing an example structure of an electronic component 21.

Fig. 8 is an outlined view showing an example structure of an embossable card 103 having a built-in electronic component according to a third embodiment.

Fig. 9 is a plan showing an example structure of an electronic component 31.

Fig. 10 is a perspective view of an example manufacturing process (No. 1) for embossable IC cards, according to an embodiment.

Fig. 11A and Fig. 11B are a cross-sectional view and a plan view showing an example of a manufacturing process (No. 2) for embossable IC cards, according to the embodiment.

Fig. 12A, Fig. 12B, and Fig. 12C are a cross-sectional view taken on the line XIIA-XIIA, a plan view, and a cross-sectional view taken on the line XIIC-XIIC showing an example of a manufacturing process (No. 3) for embossable IC cards, according to the embodiment.

Fig. 13A, Fig. 13B, and Fig. 13C are a cross-sectional view taken on the line XIIIA-XIIIA, a plan view, and a cross-sectional view taken on the line XIIIC-XIIIC showing an example of a manufacturing process (No.4) for embossable IC cards, according to the embodiment.

Fig. 14A, Fig. 14B, and Fig. 14C are a cross-sectional view taken on the line XIVA-XIVA, a plan view, and a cross-sectional view taken on the line XIVC-XIVC showing an example of a manufacturing process (No. 5) for embossable IC cards, according to the embodiment.

Fig. 15 is a perspective view showing an example of a structure of an information reading and confirming system 200 for embossed IC cards, according to an embodiment.

Fig. 16 is a block diagram showing an example of an internal structure of the electronic component 11 of the embossed card 100 having the built-in electronic component according to the embodiment.

Fig. 17 is a block diagram showing an example of an internal structure of a card reader/writer 33, according to an embodiment.

Fig. 18 is a flowchart showing an example processing of the information reading and confirming system for embossed cards having a built-in electronic component, according to an embodiment.

Fig. 19 is a plan showing an example structure of an embossed card 1 according to a conventional method.

Fig. 20 is a view showing an example structure of an embossed card 2 having a built-in electronic component, according to the conventional method.

Fig. 21 is a view showing an example structure of an embossed card 3 having a built-in electronic component, according to the conventional method.

### DESCRIPTION OF THE PREFERRED EMBODIMENTS

An embossable IC card, a manufacturing method of the IC card, and an information reading and confirming system for the IC card according to an embodiment of the present invention will be described next by referring to the drawings.

### (1) Embossable IC card

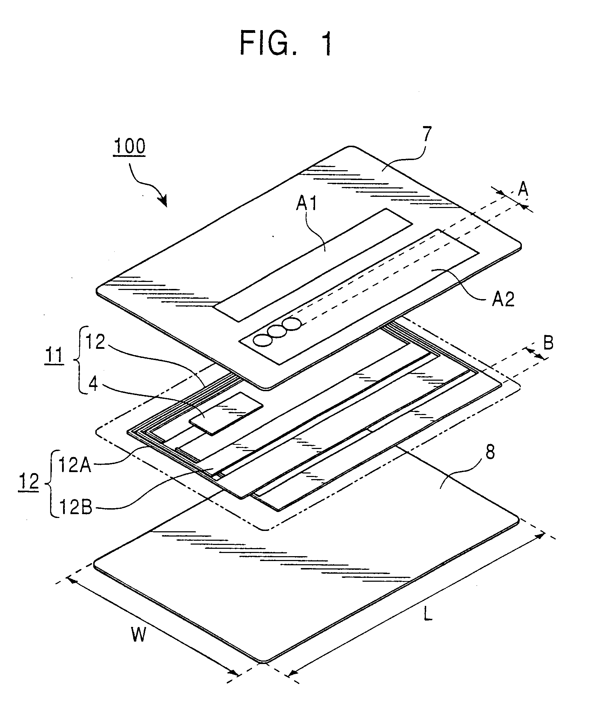

Fig. 1 is a perspective view showing an example structure of an embossable IC card 100 according to an embodiment.

In the present embodiment, the width of an antenna pattern disposed along an embossable area of a card member is made wider than the longitudinal length of the largest embossed letter or symbol formed by embossing. Therefore, even if a letter or a symbol is formed at the antenna pattern outside the embossable area, the antenna pattern is prevented from being broken. In addition, the operation of a system using the card is made smooth.

The embossable IC card 100 is a non-contact electronic card, and has a laminate structure in which an electronic component is sandwiched by front and rear card members 7 and 8 both having a length of L mm and a width of W mm, as shown in Fig. 1. In the front card member 7, embossable areas A1 and A2 are formed at locations specified in advance. According to the JIS standard of the embossable card 100, the two embossable areas A1 and A2 are assigned to one card 100; in the embossable area A1 disposed almost at the center of the card, embossed symbols such as those for the membership number and the expiration date of the card owner are formed. Below the area, in the embossable area A2, embossed letters such as those for the party who issues the card and the name of the card owner are formed. Embossed letters and embossed symbols are also called hereinafter embossment information.

The embossed letters and symbols are formed by an embossing apparatus not shown. For example, the IC card 100 is sandwiched by metal dies and pressed to form relatively shallow embossed letters and symbols. Unlike coining, since the protrusions and recesses of the dies face each other, the thickness of the card, including an area where letters and symbols are embossed, is little changed.

The electronic component 11 sandwiched by the front and rear card members 7 and 8 is formed of an IC chip 4, and a loop antenna body 12 disposed around the IC chip 4, for example, disposed so as to surround the IC chip 4, and connected to the IC chip 4. In the loop antenna body 12, thin antenna patterns 12A and thick antenna patterns 12B are connected in series and in a loop manner, and form, for example, a three-turn antenna pattern. When the longitudinal length (letter height) of the largest letter or symbol formed in the first and second embossable areas A1 and A2 by embossing is called "A" and the width of the thick antenna patterns 12B is called "B," it is specified that A < B. In other words, the width B of the thick antenna patterns disposed along the embossable areas A1 and A2 is made wider than the longitudinal length A of the largest embossed letter or symbol formed by the embossing apparatus.

Therefore, even if embossed letters and symbols are formed at the thick antenna patterns 12B outside the embossable areas, when a part of the width of the thick antenna patterns 12B is called α, α = B - A is always left. Consequently, even if an embossed letter or symbol is formed outside the embossable areas A1 and A2, the loop antenna body 12 is prevented from being broken.

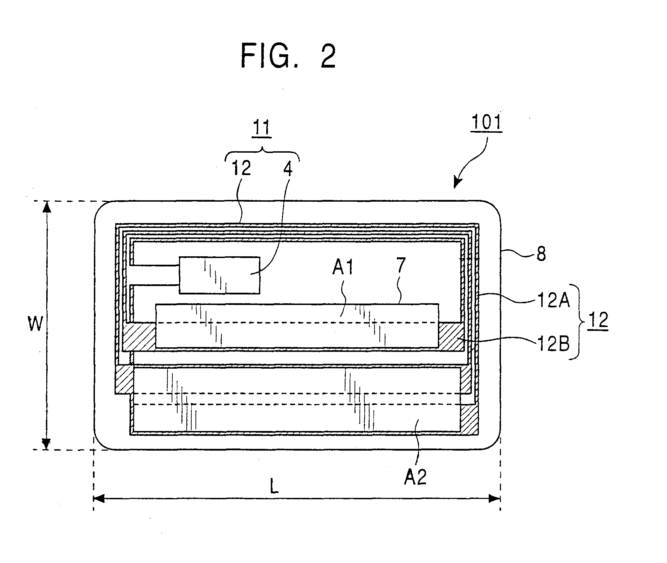

Fig. 2 is a mount image view showing an example structure of an embossable card 101 having a built-in electronic component according to a first embodiment.

In the present embodiment, the embossed letter or symbol having the maximum longitudinal length is extracted in advance among embossed letters and symbols which can be used in the first and second embossable areas A1 and A2, and the width B of thick antenna patterns 12B passing under the embossable areas A1 and A2 is made wider than the longitudinal length A of the largest embossed letter or symbol. With these operations, even when letters and symbols are embossed at any location in the embossable areas A1 and A2, it is ensured that the loop antenna body 12 is not broken.

The embossable card 101 having a built-in electronic component shown in Fig. 2 has a length of about 90 mm and a width W of 60 mm, and has a laminate structure in which an electronic component 11 is sandwiched by the front and rear card members 7 and 8. The electronic component 11 has an IC chip 4 and a loop antenna body 12. In Fig. 2, to make the card structure easy to understand, only the embossable areas A1 and A2 are shown in the front card member 7.

In the present embodiment, one line of a thick antenna pattern 12B is disposed under the first embossable area Al, and two lines of thick antenna patterns 12B are disposed under the second embossable area A2. The width B of the thick antenna patterns 12B passing under the embossable areas A1 and A2 is made wider than the longitudinal length A of the largest embossed letter or symbol formed by the embossing apparatus. When the longitudinal length of the largest embossed letter or symbol is set to about 7 mm, for example, the width B of the thick antenna patterns 12B is set to about 8 mm. The difference α therebetween is assured by about 1 mm.

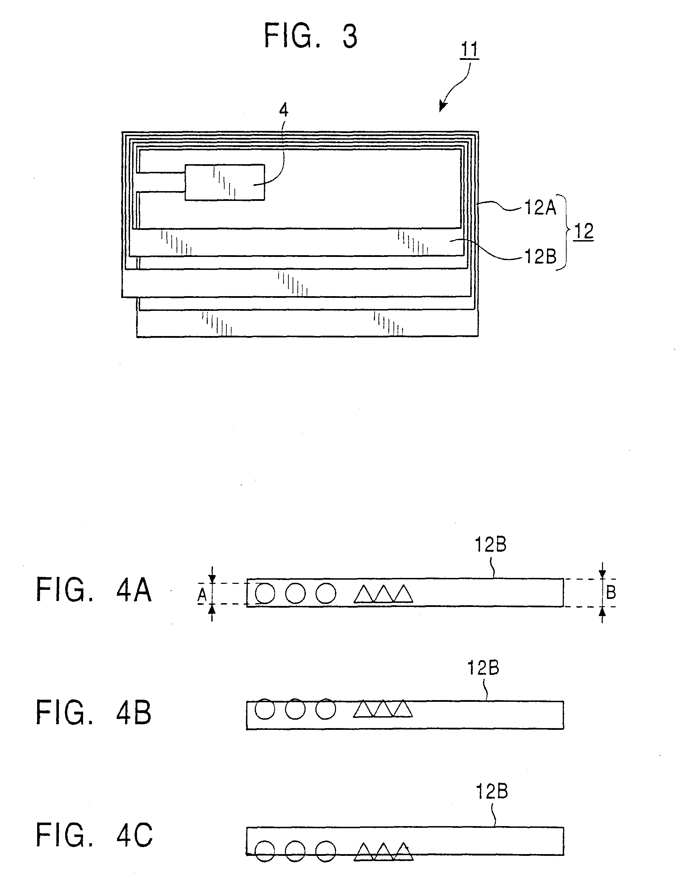

In the loop antenna body 12 of the electronic component 11 shown in Fig. 3, thin antenna patterns 12A about 1 mm wide and thick antenna patterns 12B about 8 mm wide (B) are connected in series and in a loop manner to form, for example, a three-turn antenna pattern. Both ends of the antenna pattern are connected to the IC chip 4 and a capacitor not shown, and these electronic parts have a remote IC function. The capacitor is used to make receiving efficiency as high as possible by tuning the loop antenna body 12 into the carrier frequency of an electromagnetic field. When it is allowed that receiving efficiency is lowered, the capacitor may, of course, be omitted. The carrier frequency is about 13.56 MHz.

Since the IC card 101 is of a non-contact type, it is not provided with a terminal for information input and output. This embossable card 101 receives an electromagnetic field in which information has been converted to a predetermined modulated electric wave by the L times W loop antenna body 12 having almost the same size as the IC card. Therefore, almost the same receiving efficiency as that of a thin antenna pattern formed in a loop manner by the conventional method is obtained. The predetermined modulated electric wave received by the loop antenna body 12 is demodulated by the IC chip 4 and written into a non-volatile memory, and the information is read from the memory.

When the IC card 101 is used as a usual non-contact-type IC card, the driving power source of the IC chip is obtained from external electromagnetic energy by the loop antenna body 12. For example, the electromagnetic field received by the loop antenna body 12 is converted to induced electromotive force according to the law of electromagnetic induction, the electromotive force is rectified to obtain a DC power source, and the DC voltage is sent to the IC chip 4. With a three-turn antenna pattern at a carrier frequency of about 13.56 MHz, a power source of 2.2 V at about 1 mA is obtained. Electricity may, of course, be obtained from an external high-frequency electromagnetic energy by the loop antenna body 12 or other elements in addition to this DC power.

Examples illustrating relationships between the thick antenna patterns 12B and letter and symbol dimensions will be described next.

In an example shown in Fig. 4A, "oooΔ Δ Δ" having a longitudinal length A of, for example, 7 mm is formed as embossed letters and symbols at a thick antenna pattern 12B having a width B of 8 mm. In this case, even when the embossed letters and symbols, "oooΔ Δ Δ," are made at the center of the thick antenna pattern 12B, an antenna pattern having a width of 0.5 mm is left at each end. Therefore, even when embossed letters and symbols are made symmetrically at the center of the thick antenna pattern 12B by an embossing apparatus to go through the antenna pattern, the antenna pattern is still connected at some location and the loop antenna body 12 is prevented from being broken.

Fig. 4B shows a case in which embossed letters and symbols "ooo" of "oooΔ Δ Δ" are formed beyond the upper edge of the thick antenna pattern 12B. In this case, a portion having a width of 1 mm or more of the antenna pattern is left at the lower edge. Therefore, even when embossed letters and symbols are made around the upper side of the thick antenna pattern 12B by an embossing apparatus to go through the antenna pattern, the antenna pattern is still connected at some location and the loop antenna body 12 is prevented from being broken.

Fig. 4C shows a case in which the embossed letters and symbols "oooΔ Δ Δ" are formed beyond the lower edge of the thick antenna pattern 12B. In this case, a portion having a width of 1 mm or more of the antenna pattern is left at the upper edge. Therefore, even when embossed letters and symbols are made around the lower side of the thick antenna pattern 12B by an embossing apparatus to go through the antenna pattern, the antenna pattern is still connected at some location and the loop antenna body 12 is prevented from being broken.

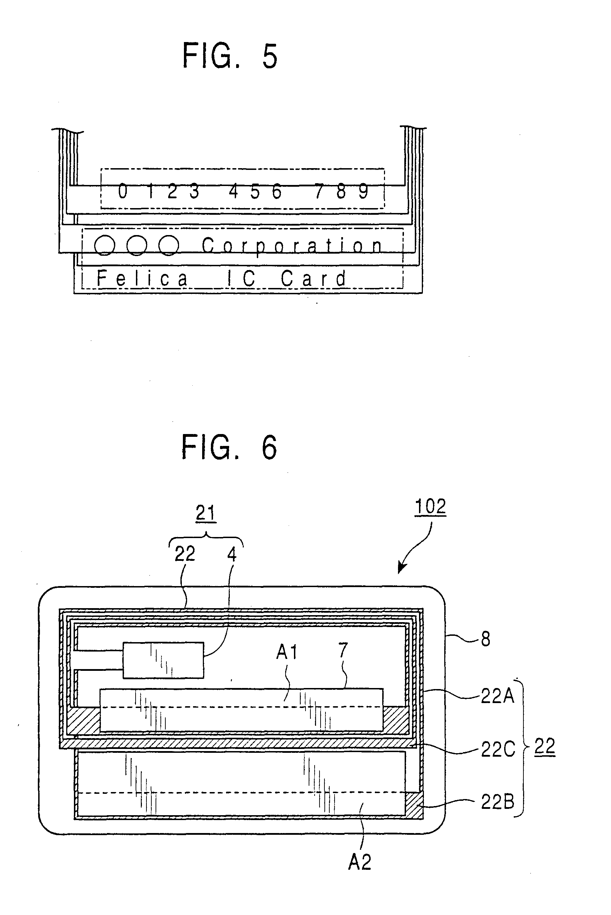

Fig. 5 shows an example of embossed letters and symbols formed in the embossable areas A1 and A2. In this example, in the embossable area A1, embossed symbols such as "0123 456 789" are formed as the membership number and the expiration date of the card owner. Below this area, in the embossable area A2, embossed letters are formed such as the party who issues the card, "ooo Corporation Felica IC Card," and the name of the card owner.

As described above, according to the embossable card 101 having an electronic component in it, of the first embodiment, although the thick antenna patterns 12B are formed below the embossable areas A1 and A2, and since the loop antenna body 12 has almost the same size as the IC card, the loop antenna body 12 has the same receiving efficiency as that formed of a usual thin antenna pattern. In addition, embossed letters and symbols can be formed at any locations in the embossable areas A1 and A2. Therefore, the reliable, embossable IC card 101 is provided.

Another example structure of an embossable card having an electronic component in it will be described next. Fig. 6 is an outlined view showing an example structure of an embossable card 102 having an electronic component in it, according to a second embodiment. In this embodiment, a card member 7 is provided with two embossable areas A1 and A2, and an antenna pattern 22C is formed between the embossable areas A1 and A2. The number of antenna patterns passing therebetween is not limited to one.

The embossable card 102 having an electronic component in it, shown in Fig. 6, has the same size as in the first embodiment, and has a laminate structure in which front and rear card members 7 and 8 sandwich an electronic component 21. The electronic component 21 is formed of an IC chip 4 and a loop antenna body 22. Also in Fig. 6, to make the card structure easy to understand, only the embossable areas A1 and A2 are shown in the front card member 7.

In the present embodiment, one line of a thick antenna pattern 22B is disposed below each of the first and second embossable areas A1 and A2, and the antenna pattern 22C having a predetermined width is disposed between the two embossable areas A1 and A2. The thin antenna pattern 12A described in the first embodiment may be of course used as the antenna pattern disposed between the embossable areas A1 and A2. It is preferred that an antenna pattern having a width wider than the distance between the embossable areas be used. This is because, even when embossed letters and symbols are made by an embossing apparatus to go through the antenna pattern 22C, the antenna pattern is still connected at some location and the loop antenna body 22 is prevented from being broken.

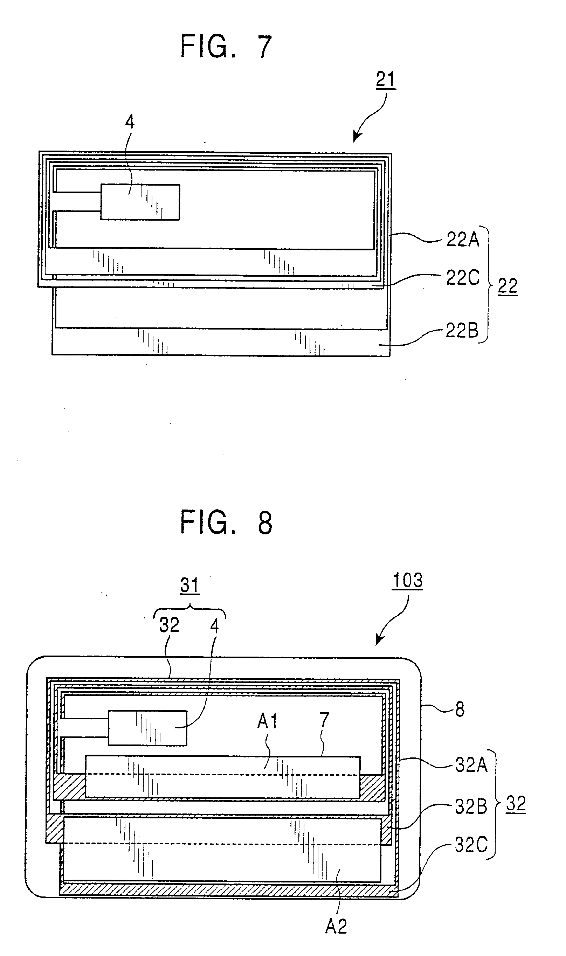

In the loop antenna body 22 of the electronic component 21 shown in Fig. 7, thin antenna patterns 22A about 1 mm wide, the antenna pattern 22C about 2 mm wide, and the thick antenna pattern 22B about 8 mm (B) wide are connected in series and in a loop manner to form, for example, a three-turn antenna pattern. Both ends of the antenna pattern are connected to the IC chip 4 and a capacitor not shown. These electronic elements have a remote IC function. In this embodiment, a power is supplied in the same way as in the first embodiment. This loop antenna has almost the same receiving efficiency as that formed of a thin antenna pattern made in a loop manner by the conventional method.

In the present embodiment, three antenna patterns may be formed in the two embossable areas A1 and A2. Embossment information can be made without any restrictions. In this case, when the antenna patterns disposed at both sides which sandwich the center one is made wide, the loop antenna body 22 is prevented from being broken even if a positional shift occurs in mounting The antenna patterns disposed at both sides may be located below the embossable areas A1 and A2.

As described above, according to the embossable card 102 having a built-in electronic component, of the second embodiment, since the antenna pattern 22C having a predetermined width is disposed between the two embossable areas Al and A2, the area where the loop antenna is coupled with the electromagnetic field is reduced. However, the thick antenna pattern 22B is disposed below the embossable area A2 to make the loop antenna body 22 having almost the same size as the IC card. Letters and symbols can be embossed in these embossable areas without reducing the receiving efficiency from that of a three-turn loop antenna body formed of a usual thin antenna pattern. Therefore, the highly reliable, embossable IC card 102 is provided.

Fig. 8 is an outlined view showing an example structure of an embossable card 103 having a built-in electronic-component according to a third embodiment.

In this embodiment, a card member 7 is provided with embossable areas A1 and A2, and an antenna pattern 32C having a predetermined width is disposed along the card edge under the embossable area A2. The number of the antenna pattern 32C passing under the area is not limited to one.

The embossable card 103 having a built-in electronic component shown in Fig. 8 has the same size as in the first and second embodiments, and has a laminate structure in which front and rear card members 7 and 8 sandwich an electronic component 31. The electronic component 31 has an IC chip 4 and a loop antenna body 32. Also in Fig. 8, to make the card structure easy to understand, only the embossable areas A1 and A2 are shown in the front card member 7.

In the present embodiment, one line of a thick antenna pattern 32B is disposed below each of the first and second embossable areas A1 and A2, and the antenna pattern 32C having a predetermined width is disposed along the card edge under the embossable area A2. The thin antenna pattern described in the first embodiment may be of course used as the antenna pattern 32C disposed below the embossable area A2. It is preferred that an antenna pattern having a width wider than the thin antenna pattern be used. This is because, even when embossed letters and symbols are made by an embossing apparatus to go through the antenna pattern 32C, the antenna pattern is still connected at some location and the loop antenna body 32 is prevented from being broken.

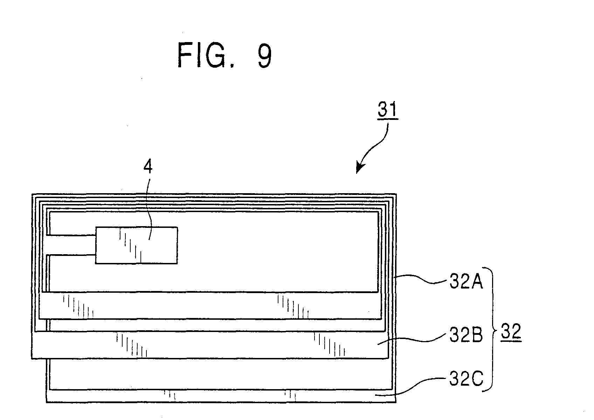

In the loop antenna body 32 of the electronic component 31 shown in Fig. 9, thin antenna patterns 32A about 1 mm wide, the antenna pattern 32C about 3 mm wide, and the thick antenna patterns 32B about 8 mm (B) wide are connected in series and in a loop manner to form, for example, a three-turn antenna pattern. Both ends of the antenna pattern are connected to the IC chip 4 and a capacitor not shown. These electronic elements have a remote IC function.

Also in this embodiment, a power is supplied in the same way as in the first embodiment. This loop antenna has almost the same receiving efficiency as that formed of a thin antenna pattern made in a loop manner in the conventional method. Three antenna patterns may be formed below the embossable area A2. Embossment information can be made without any restrictions. In this case, when the antenna patterns disposed close to the embossable area A2 is made wide, the loop antenna body 32 is prevented from being broken even if a positional shift occurs in mounting. The antenna patterns disposed close to the embossable area A2 may be located below the embossable area A2.

As described above, according to the embossable card 103 having a built-in electronic component of the third embodiment, the antenna pattern 32C having a predetermined width is disposed along the card edge below the embossable area A2, and the loop antenna body 32 having almost the same size as the IC card is formed. Letters and symbols can be embossed in these embossable areas A1 and A2 without reducing the receiving efficiency from that of a three-turn loop antenna body formed of a usual thin antenna pattern. Therefore, the highly reliable, embossable IC card 103 is provided.

### (2) Manufacturing method of embossable IC card

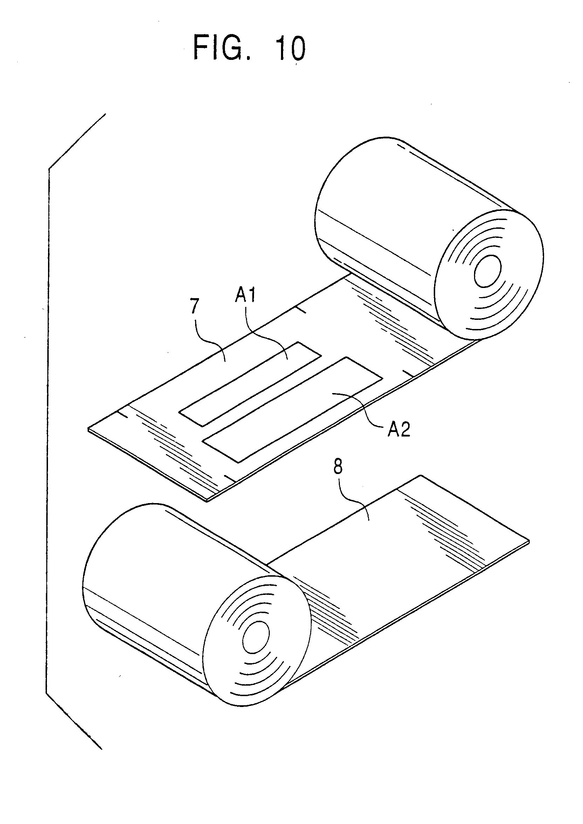

Fig. 10 to Fig. 14C are views showing examples of manufacturing processes (No. 1 to No. 5) of embossable IC cards according to an embodiment.

In the present embodiment, it is assumed that a card member having embossable areas at predetermined locations thereof is formed; antenna patterns are formed in a loop manner of which portions disposed along the embossable areas have widths wider than the longitudinal length of the largest embossed letter or symbol made by embossing; then, the antenna patterns are connected to an IC chip to form an electronic component; and the electronic component is sandwiched by the card members. In this embodiment, it is also assumed that the IC cards 101 described in the first embodiment are formed in a connected manner on a long sheet, and then, each IC card 101 is punched out from the sheet.

Under these assumptions, as shown in Fig. 10, a front card member 7 having embossable areas A1 and A2 at predetermined locations thereof and a rear card member 8 are formed. These card members 7 and 8 are printed on long-sheet film resin and wound like a role. The first and second embossable areas A1 and A2 are specified in printing according to a JIS standard.

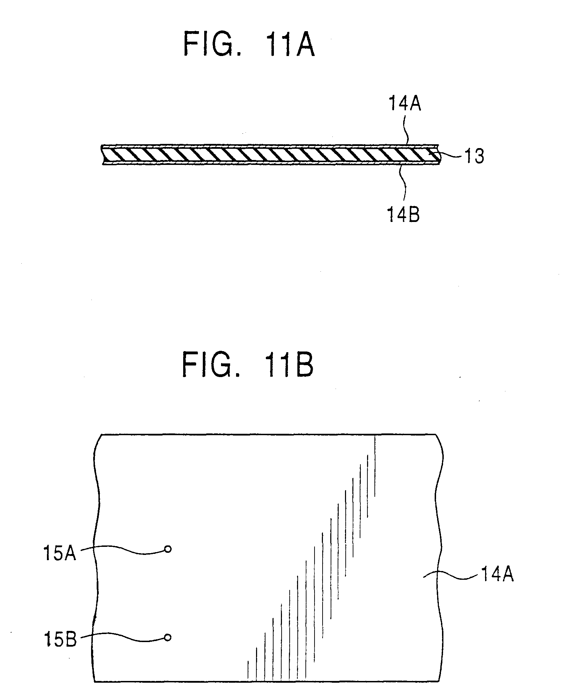

Next, to form a loop antenna body 12, for example, a long-sheet substrate 13 having copper-foil patterns 14A and 14B on both side thereof is prepared, as shown in Fig. 11A. The shape of the substrate 13 is of course not limited to a long-sheet shape, but may be a card shape. The front and rear copper foil patterns 14A and 14B have a thickness of about several dozen to several hundred micrometers, and are used to form a thick antenna pattern, a thin antenna pattern, an antenna pattern having a predetermined width, and an electrode of a capacitor. Fig. 11A is a cross-sectional view of the substrate 13 having the copper foil patterns on both sides thereof, and Fig. 11B is a plan thereof.

To form the loop antenna body 1 described in the first embodiment, it is better to form in advance through holes 15A and 15B at predetermined positions, as shown in Fig. 11B. These through holes 15A and 15B electrically connect the front and rear copper foil patterns. A reticle having an image of the loop antenna body 12 is made. in the reticle, the width of the portions corresponding to antenna patterns disposed along the embossable areas on the front card member 7 is made wider than the longitudinal length of the largest embossed letter or symbol formed by an embossing apparatus. For example, the portion corresponding to a thin antenna pattern 12A is about 0.7 to 1.0 mm wide, and the portion corresponding to a thick antenna pattern 12B is about 7 mm to 10 mm wide.

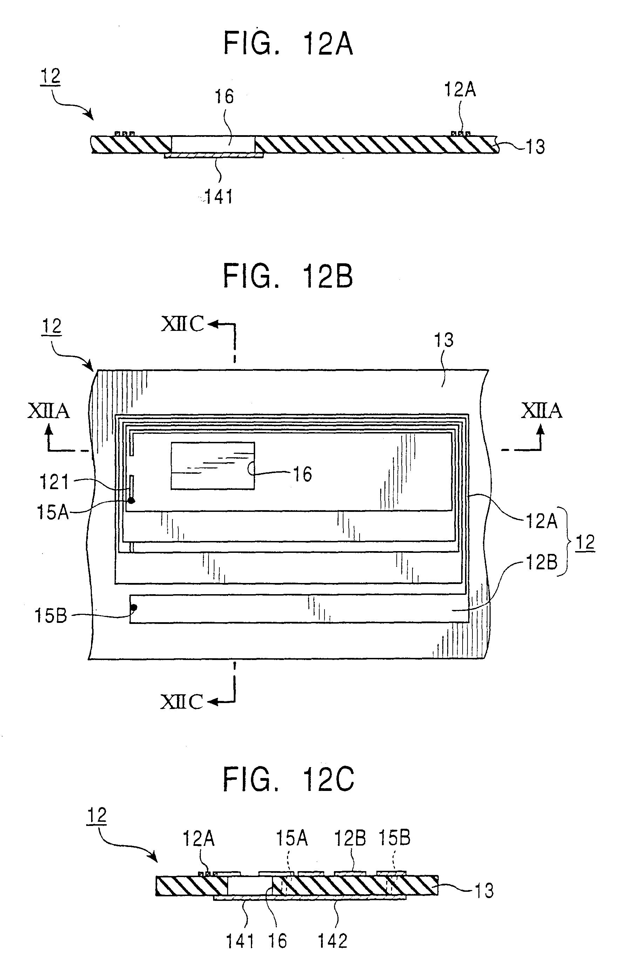

Then, a resist film not shown is applied to the surface of one of the copper foil patterns with the positions of the through holes 15A and 15B shown in Fig. 11B being used as references. The resist film is exposed to light with the reticle being used as a mask. Then, the copper foil pattern is removed from the substrate by the use of a predetermined etching solution. The substrate is then washed with water to form the loop antenna body 12 formed of a sheet-shaped coil patterns, and an accumulation electrode not shown, on the substrate, as shown in Fig. 12B.

Etching is also applied to the copper foil pattern 14B formed on the rear side of the substrate to leave a portion 141 serving as the bottom of an IC-chip mounting zone and an antenna pattern 142 for connection which crosses antenna patterns (as shown in Fig. 12A and Fig. 12C). The antenna pattern 142 for connection is electrically connected to antenna patterns 121 and 12B formed on the front surface by the through holes 15A and 15B (indicated by black circles in the figure). Then, the front surface of the substrate shown in Fig. 12A is selectively removed to make an opening. It is preferred that an IC-chip-mounting opening section 16 be formed which uses the copper foil pattern 141 formed on the rear surface of the substrate as the bottom. Fig. 12A is a cross-sectional view taken on the line XIIA-XIIA of Fig. 12B, and Fig. 12C is a cross-sectional view taken on the line XIIC-XIIC of Fig. 12B.

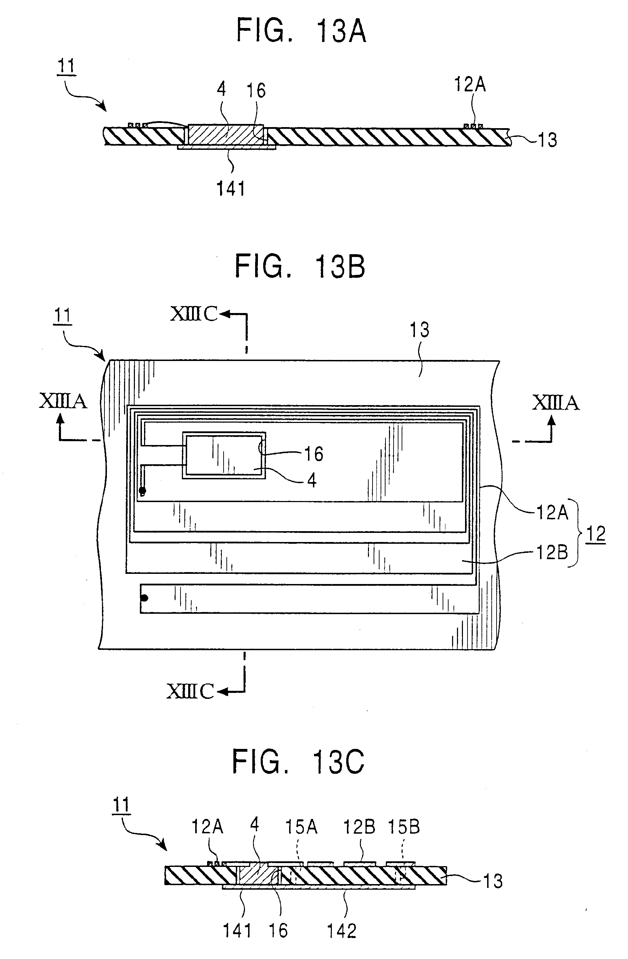

Then, an IC chip 4 is mounted in the opening section 16 of the substrate 13 having the loop antenna body 12, as shown in Fig. 13A, and both ends of the loop antenna body 12 are electrically connected to the IC chip 4. With these operations, an electronic component 11 having a three-layer structure is formed. Fig. 13A is a cross-sectional view taken on the line XIIIA-XIIIA of Fig. 13B, and Fig. 13C is a cross-sectional view taken on the line XIIIC-XIIIC of Fig. 13B.

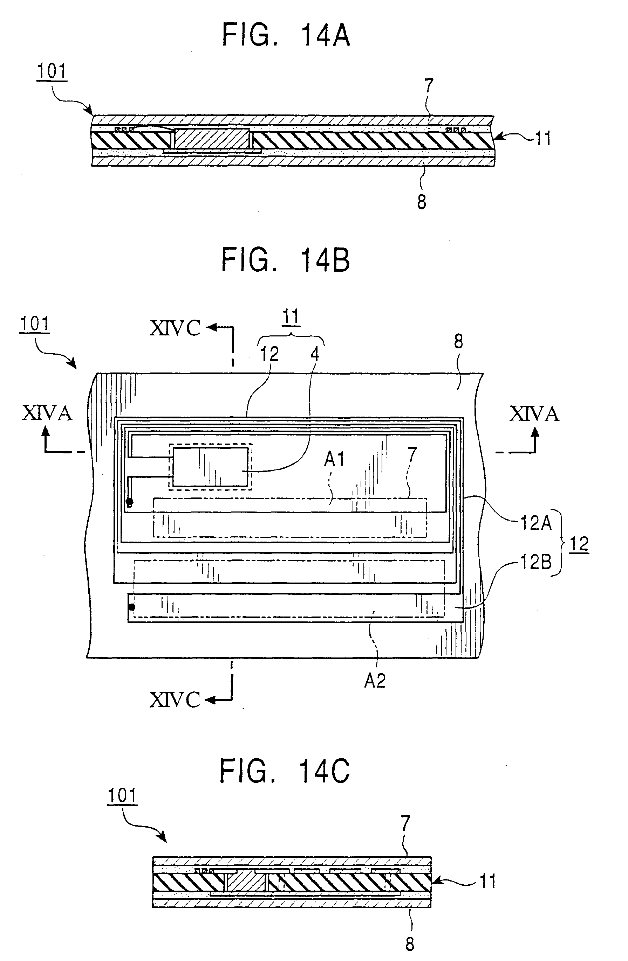

The electronic component 11 is sandwiched by the card members 7 and 8, and sealed. In the present embodiment, epoxy-resin adhesive members are applied to the opposing surfaces of the long-sheet card members 7 and 8. Then, the long-sheet electronic component 11 is sandwiched by the card members 7 and 8 and they are pasted with each other at a predetermined temperature and pressure as shown in Fig. 14A. With these operations, the long-sheet IC cards 101 are formed, as shown in Fig. 14C. After the sheet-shaped IC cards 101 is hardened, each IC card 101 is punched. An embossable card having a built-in electronic component is thus manufactured. In Fig. 14B, only the embossable areas A1 and A2 enclosed by two-dot chain lines are shown in the front card member 7. Fig. 14A is a cross-sectional view taken on the line XIVA-XIVA of Fig. 14B, and Fig. 14C is a cross-sectional view taken on the line XIVC-XIVC of Fig. 14B.

As described above, according to the manufacturing method of embossable IC cards of the present embodiment, embossable cards having a built-in electronic component are manufactured at a high reproducibility. Even when an embossed letter or symbol is formed at the loop antenna body 1? outside the embossable areas of the card members 7 and 8 to go through the loop antenna body, since a part of the thick antenna patterns 12B always remains, if a letter or a symbol is formed outside the embossable areas, the loop antenna body is prevented from being broken.

### (3) Information reading and confirming system for embossed IC cards

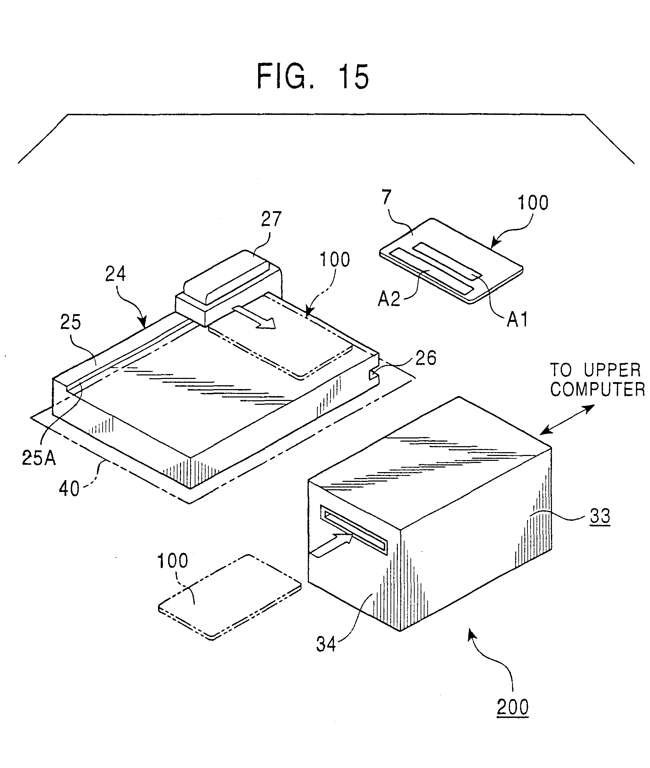

Fig. 15 is a perspective view showing an example structure of an information reading and confirming system 200 for embossed IC cards, according to an embodiment of the present invention.

In the present embodiment, an embossed IC card 100 having an IC chip and an antenna pattern is prepared in advance. At a site where data processing means for IC cards is installed, the information related to the card owner recorded in the IC chip is read and predetermined transaction processing is achieved. At a site where data processing means of this type is not installed, the information related to the card owner formed in an embossable area is read by information transfer means for use solely with embossment information to transfer it to a sheet. The amount of the transaction is automatically charged later.

The information reading and confirming system 200 for embossed IC cards shown in Fig. 15 is very suited not only to cash payment systems but also to credit-card payment systems in various transactions. The above-described embossed IC cards 100 are used in the system 200. Each of these IC cards 100 has the embossable areas A1 and A2 at positions specified in advance of the card member 7 and has the IC chip 4 and the loop antenna body 12 sandwiched by the front and rear card members 7 and 8 (as shown in Fig. 1).

This system 200 is at least provided with information transfer means 24 for use solely with embossment information. By using this means, the information related to the card owner formed in an embossable area is transferred to a sheet. The information transfer means 24 is provided with a table (base) 25 for placing a card and papers. The IC card 100 is placed on the table 25 and secured. At one end of the table 25, a stepped section 25A for placing papers is provided. Papers 40 are placed such that one side thereof is butted against the stepped section 25A.

The papers 40 are formed of a plurality of sheets having a predetermined duplicating function. The papers 40 have a predetermined recording area. The information related to the card owner is transferred from the embossed card and recorded. At a side of the table 25, a slider 26 is provided. A handle 27 which is movable to the right and to the left is mounted to the slider 26. The handle 27 is operated, for example, so as to reciprocate to the right and left along the slider 26 while being pressed downwards.

According to a recording principle used in the information transfer means 24, the card 100 is placed on the table 25 with the surface on which embossed letters and symbols are formed facing upwards, then the papers 40 having a duplicating function are placed on the card 100 along the stepped section 25A. Under this condition, the handle 27 is operated so as to reciprocate to the right and left along the slider 26 while being pressed downwards. With these operations, the information related to the card owner is duplicated from the embossed card 100 to the predetermined recording area of the papers 40 and recorded.

Alternatively, the system 200 is provided with a card reader/writer 33 serving as data processing means for IC cards. The card reader/writer 33 has a card insertion slot 34, where the card 100 is inserted. The card reader/writer 33 reads the information related to the card owner recorded in the IC chip 4 of the card 100. In this embodiment, the information related to the card owner formed in an embossable area is recorded into the IC chip 4 of the IC card to prevent card forgery.

As data processing means, an upper business computer not shown is provided in addition to the card reader/writer 33 to achieve predetermined transaction processing according to the information related to the card owner. In the present embodiment, when the card reader/writer 33 is installed, the information related to the card owner is read from the IC chip 4 of the card 100 or predetermined information related to a transaction is written into the IC chip 4. When the card reader/writer 33 is not installed, the information related to the card owner printed in a stand-out manner at embossable areas A1 and A2 are transferred to a slip by using the information transfer means 24, and the slip is left as proof of the transaction.

In the present embodiment, a control apparatus is provided for the card reader/writer 33 or for the upper computer to compare and verify the information related to the card owner formed in the embossable areas A1 and A2 and that recorded in the IC chip 4 of the IC card. The information related to the card owner formed in the embossable area is read by a letter recognition apparatus such as an OCR. If the letter and symbol information formed on the front surface of the card differs from that recorded in the card, alarm processing is achieved and the card is forcedly discharged.

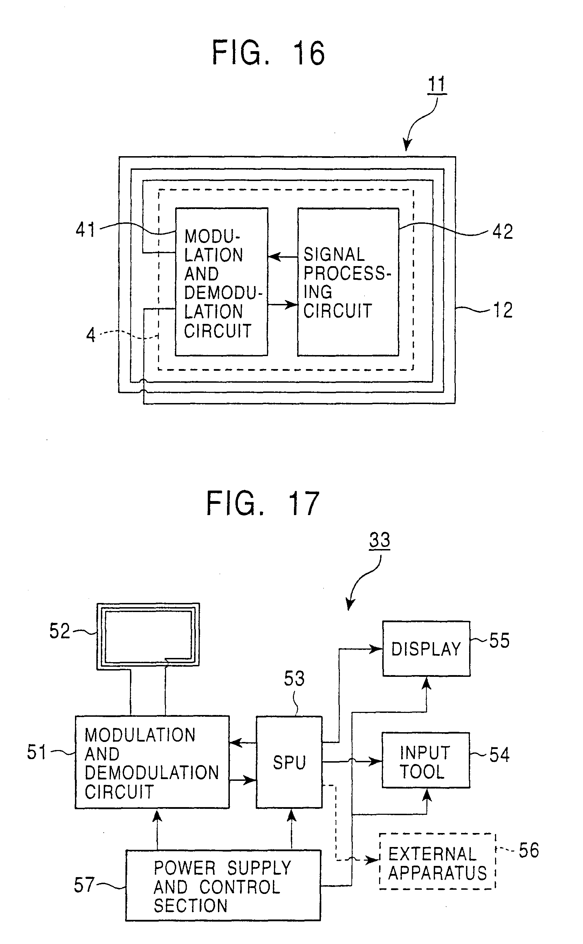

An example of an internal structure of the electronic component 11 of the embossed card 100 having a built-in electronic component will be described next. Fig. 16 is a block diagram showing an example of an internal structure of the electronic component 11.

The electronic component 11 shown in Fig. 16 has the IC chip 4 and the loop antenna body (receiving means) 12. The IC chip 4 includes a modulation and demodulation circuit 41 and a signal processing circuit 42. The signal processing circuit 42 has a non-volatile memory not shown.

The loop antenna body 12 is connected to the modulation and demodulation circuit 41. A modulated wave (13.56 MHz) received by the loop antenna body 12 is demodulated by the demodulation function of the modulation and demodulation circuit 41. For example, a data sequence (Data: R to C) sent from the card reader/writer 33 to the card 100 is demodulated. The demodulated data sequence is sent from the modulation and demodulation circuit 41 to the signal processing circuit 42. The signal processing circuit 42 applies decoding processing to the demodulated data sequence, and information is read from the non-volatile memory according to the result of the decoding, or recording data included in the data sequence is written into the memory.

The information read from the non-volatile memory is, for example, ASK-modulated by the modulation function of the modulation and demodulation circuit 41 to form a data sequence (Data: C to R) and the data sequence is sent to the card reader/writer 33 through the loop antenna body 12. A part of the electromagnetic field emitted from the card reader/writer 33 is converted to an electrical signal and used as a power source of the card 100. In the present embodiment, the modulation and demodulation circuit 41 has a power-source generating function, and converts electromagnetic energy to a stable DC electrical power. All circuits in the IC card 100 are operated by this power source.

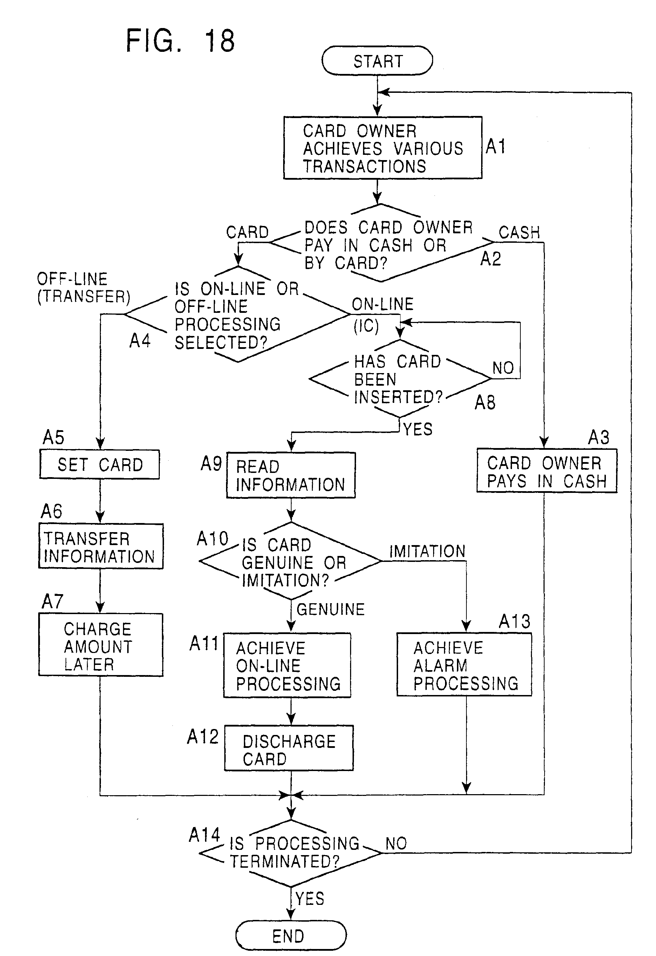

An example of an internal structure of the card reader/writer 33 will be described next. Fig. 17 is a block diagram showing an example of an internal structure of the card reader/writer 33 according to an embodiment of the present invention.

The card reader/writer 33 shown in Fig. 17 is also provided with a loop antenna body 52 to allow communications with the IC card 100. The loop antenna body 12 of the card 100 and the loop antenna body 52 of the card reader/writer 33 are electromagnetically coupled and used in an electrically non-contact state.

The loop antenna body 52 is connected to a modulation and demodulation circuit 51, and a modulated wave sent from the card 100 is demodulated by the demodulation function of the circuit 51. For example, a data sequence (Data: C to R), including the membership number of the card owner and the expiration date of the card, sent from the card 100 to the card reader/writer 33 is demodulated. The data sequence is configured according to a predetermined data format. One packet of the data sequence is, for example, formed of a header and data.

The modulation and demodulation circuit 51 is connected to a signal processor unit (hereinafter called an SPU) 53. The SPU 53 includes a central processing unit (CPU) not shown for achieving various types of calculation processing, a ROM storing a control program, and a general-purpose RAM used as a work memory. The SPU 53 applies various types of data processing to the demodulated information according to the control program read from the ROM, and outputs, for example, information to be written into the IC card 100 to the modulation and demodulation circuit 51.

The modulation and demodulation circuit 51 modulates various types of information received from the SPU 53, and then, sends a data sequence (Data: R to C) to the IC card 100 through the loop antenna body 52 in the form of a modulated radio wave. To efficiently emit the data sequence in the form of an electromagnetic field, the data sequence is ASK-modulated by the use of a carrier wave having a frequency of 13.56 MHz and the modulated radio wave is sent to the IC card 100 as an electromagnetic field (about 500 (µV/m) by the loop antenna body 52. A power supply and control section 57 is connected to the modulation and demodulation circuit 51, the SPU 53, an input tool 54, and a display 55 to send DC power. The power supply and control section 57 sends a carrier wave having a frequency of 13.56 MHz to the modulation and demodulation circuit 51.

The input tool 54, such as a keyboard, is connected to the SPU 53. The operator manipulates the input tool 54 to give an instruction to the SPU 53. The display 55 is also connected to the SPU 53. Information read from the card 100 and information to be written into the card 100 are displayed on the display 55 for confirmation. The SPU 53 is also connected to an external apparatus 56, such as an upper computer, to allow a transaction to be automatically billed on-line.

Example processing to be achieved by the information reading and confirming system 200 will be described next. Fig. 18 is a flowchart of the example processing to be achieved by the information reading and confirming system 200 for embossed cards having a built-in electronic component, according to an embodiment of the present invention.

In the present embodiment, it is assumed that an embossed IC card 100 having an IC chip and an antenna pattern is prepared in advance; and when various transactions are made and the amounts of the transactions are charged by the card, at a site where data processing means for the IC card is installed, the information related to the card owner recorded in the IC chip is read and predetermined transaction processing is achieved, and at a site where data processing means of this type is not installed, the information related to the card owner formed in an embossable area is read by information transfer means for use solely with embossment information to transfer it to a sheet and the amounts of the transactions are automatically charged later.

Under the above assumption, various transactions are made in step A1 in the flowchart shown in Fig. 18. The card 100 of this type can be used in current restaurants, various installment sales shops, gas stations, and banks, and actually used at least when the information transfer means 24 for use solely with embossment information is provided and a bank account of the card owner has been opened. It is required that data processing means for IC cards be connected on-line to banks.

Then, in step A2, the card owner determines whether the owner pays the amounts of the transactions in cash or by card. When the card owner has decided to pay in cash, the processing proceeds to step A3, and the amounts of the transactions are paid in cash. When the card owner has decided to pay by card in step A2, the processing proceeds to step A4.

In step A4, whether the data processing means for IC cards is used on-line or the information transfer means 24 for use solely with embossment information is used off-line is determined. When the card reader/writer 33 is not installed at the site where the transactions have been made, the processing proceeds to step A5, and the card 100 is placed in the information transfer means 24. The card 100 is actually placed on the table 25 with the surface on which embossed letters and symbols have been formed being placed upwards. On the card, the papers 40 having a duplicating function, such as slips, related to the transactions are placed along the stepped section 25A.

To transfer the embossed information, the handle 27 of the information transfer means 24 is operated to reciprocate to the right and left along the slider 26 while being pressed downwards in step A6. With this operation, the information related to the card owner is duplicated from the embossed card 100 to the predetermined recording area of the papers 40 and recorded. The information related to the card owner printed in a stand-out manner in the embossable areas A1 and A2 have been transferred to the slips, and they remain as a proof of the transactions.

In step A7, the amounts of the transactions are charged at the bank account of the card owner according to the papers 40. In step A4, when the card reader/writer 33 has been installed, the processing proceeds to step A8, and the card reader/writer 33 waits for a card to be inserted. The card owner inserts the card 100 into the card insertion slot 34 of the card reader/writer 33.

In step A9, the card reader/writer 33 reads letter and symbol information, such as the membership number and the expiration date of the card owner, from the IC chip 4. Then, the processing proceeds to step A10, where it is determined whether the card is genuine or an imitation. This determination is achieved by comparing the information related to the card owner formed in the embossable areas A1 and A2 with that recorded in the IC chip 4 of the IC card. When it is determined from the result of comparison that the card is genuine in step A10, the processing proceeds to step A11, and on-line processing is performed such as the automatic charge of the amounts of the transactions at the bank account of the card owner. Predetermined information related to the transactions may be written. Then, the processing proceeds to step A12, and the card 100 is discharged normally. When it is determined in step A10 that the card is an imitation, the processing proceeds to step A13, alarm processing is conducted, and the card 100 is forcedly discharged.

Then, the processing proceeds to step A14, and it is determined whether the processing of the information reading and confirming system is terminated. When a system available time is specified in advance, the operation is terminated when the available time elapses. When an available time is not specified and the system can be used any time, the processing returns to step A1 and the processing is repeated from step A1 to step A14 until an event which needs a halt occurs.

As described above, according to the information reading and confirming system 200 for embossed IC cards of the present invention, at a site where data processing means for use solely with the IC cards is installed, the information related to the card owner read from the IC chip 4 is read and transaction processing is achieved, and at a site where the data processing means is not installed, the information related to the card owner printed in a stand-out manner in an embossable area is transferred to a slip by the information transfer means 24 for use solely with embossment information and the slip is left as proof of the transaction.

Therefore, the amount of the transaction is automatically charged at the bank account of the customer later. During the transition period from the use of usual embossed cards to that of electronic cards, the embossed IC card 100 and the information reading and confirming system 200 work sufficiently well.

In the present embodiment, one apparatus reads the embossed area and another apparatus reads information recorded in the IC chip mounted in the IC card. In a transaction confirming and information reading method by using an IC card according to the present invention, when a card transaction terminal apparatus is used, such as an automatic teller machine (ATM) having an optical sensor for reading embossed data and a reader/writer for transmitting and receiving data in the IC chip through an antenna, a multimedia terminal, or a cash dispenser, transaction is confirmed and information is read by the use of only one apparatus. In this case, the card transaction terminal apparatus such as an ATM may include magnetic-data reading means for reading magnetic data formed in the IC card, in addition to the above-described reading section.

## Claims

1. An embossable IC card (100) comprising:
a first card member (7) having an embossable area where embossing is to be performed;
a second card member (8) disposed opposite the first card member;
an IC chip (4) sandwiched by the first and second card members; and
an antenna pattern (12) disposed around the IC chip and connected to the IC chip,
wherein the width of the antenna pattern is wider than the longitudinal length of the largest letter or symbol to be embossed in the embossable area.

2. An embossable IC card according to Claim 1, wherein the first card member (7) has a plurality of embossable areas and the antenna pattern (22C) is disposed between the plurality of embossable areas.

3. An embossable IC card according to Claim 2, wherein the width of the antenna pattern is wider than the distance between the plurality of embossable areas.

4. An embossable IC card (103) according to Claim 1, wherein the antenna pattern (32B) is disposed below the embossable area.

5. An embossable IC card (100) according to Claim 1, wherein the antenna pattern (12) is formed of a loop antenna disposed so as to surround the IC chip, and a first antenna pattern (12A) having a predetermined width and connected to the IC chip (4) and a second antenna pattern (12B) having the width wider than the longitudinal length of the largest letter or symbol to be embossed by embossing are connected in series.

6. An IC card (100) comprising:
a first card member (7) having an embossed area where embossing has been performed;
a second card member (8) disposed opposite the first card member;
an IC chip (4) sandwiched by the first and second card members; and
an antenna pattern (12) disposed around the IC chip and connected to the IC chip,
wherein the width of the antenna pattern is wider than the longitudinal length of the largest embossed letter or symbol formed in the embossed area.

7. An IC card according to Claim 6, wherein the first card member has a plurality of embossed areas and the antenna pattern (22C) is disposed between the plurality of embossed areas.

8. An IC card according to Claim 7, wherein the width of the antenna pattern is wider than the distance between the plurality of embossed areas.

9. An IC card (103) according to Claim 6, wherein the antenna pattern (32B) is disposed below the embossed area.

10. An IC card (100) according to Claim 6, wherein the antenna pattern (12) is formed of a loop antenna disposed so as to surround the IC chip, and a first antenna pattern (12A) having a predetermined width and connected to the IC chip (4) and a second antenna pattern (12B) having the width wider than the longitudinal length of the largest embossed letter or symbol formed by embossing are connected in series.

11. A transaction confirming method by using an IC card (100), the IC card (100) comprising:
a first card member (7) having embossed data formed in an embossed area;
a second card member (8) disposed opposite the first card member;
an IC chip (4) sandwiched by the first and second card members; and
an antenna pattern (12) disposed around the IC chip (4) and connected to the IC chip (4),
wherein the width of the antenna pattern (12) is wider than the longitudinal length of the largest embossed letter or symbol formed in the embossed area, and
the transaction confirming method comprising the steps of:
reading the embossed data formed in the IC card (100); and
reading information recorded in the IC chip (4) from the IC card (100) and performing transaction processing.
